Europäisches Patentamt

European Patent Office

Office européen des brevets

(19)

(11) Veröffentlichungsnummer : **0 063 253**
**B1**

(12) **EUROPÄISCHE PATENTSCHRIFT**

(45) Veröffentlichungstag der Patentschrift :
26.06.85

(21) Anmeldenummer : 82102434.6

(22) Anmeldetag : 24.03.82

(51) Int. Cl.⁴ : **B 23 Q 7/00**

(54) Vorrichtung zum selbsttätigen Ausrichten und Zentrieren von Werkstücken.

(30) Priorität : 18.04.81 DE 3115775

(43) Veröffentlichungstag der Anmeldung :
27.10.82 Patentblatt 82/43

(45) Bekanntmachung des Hinweises auf die Patenterteilung : 26.06.85 Patentblatt 85/26

(84) Benannte Vertragsstaaten :
CH FR GB LI NL

(56) Entgegenhaltungen :
DE-A- 2 320 370
DE-A- 2 741 647
DE-U- 6 947 589
DE-U- 7 117 607
FR-A- 1 462 390
US-A- 3 799 370

(73) Patentinhaber : Ernst Wagner KG
Postfach 132 St. Peter-Strasse 5
D-7410 Reutlingen 1 (DE)

(72) Erfinder : Harter, Walter
Wendelinusweg 5
D-7427 Hayingen (DE)
Erfinder : Schumacher, Karl
Schleifmühlenweg 101
D-7400 Tübingen (DE)

(74) Vertreter : Patentanwälte Dipl.-Ing. B. Schmid Dr.-Ing.
G.A. Birn Dipl.-Ing. H. Quarder
Falbenhennenstrasse 17
D-7000 Stuttgart 1 (DE)

## Beschreibung

Die Erfindung bezieht sich auf eine Vorrichtung zum selbsttätigen Ausrichten und Zentrieren von Werkstücken für die Förderung an Bearbeitungsmaschinen mit zwei in einer Bewegungsebene wirksamen Sätzen von zylindrischen Rollen, nämlich Tragrollen und hierzu geneigt angeordneten Führungsrollen. Eine Vorrichtung dieser Art ist durch das DE-U-6 947 589 bekannt geworden. Sie dient zum Fördern insbesondere rechteckiger Stückgüter, wie beispielsweise Paletten. Dabei kommt es lediglich darauf an, diese Güter etwa in der vorgesehenen Richtung zu transportieren. Ein völlig geradlinichtniger Verlauf ist ebensowenig erforderlich wie das exakte Ausrichten gegenüber der Bewegungsebene oder einer theoretischen geraden Bewegungsbahn. Leichte Schrägstellungen sind demnach ebenso in Kauf zu nehmen wie ein geringfügiger Versatz nach der einen oder anderen Seite hin. Lediglich stärkere Abweichungen von der vorgesehenen Bahn werden von den Führungsrollen jeweils automatisch ausgeglichen. Zweck dieser Vorrichtung ist es also, ein Werkstück oder Stückgut von einer Stelle zu einer anderen zu transportieren und ein seitliches Herunterfallen zu vermeiden.

Es gibt nun allerdings Anwendungsfälle, bei welchen es nicht nur darauf ankommt, den Transport etwa entlang der vorgesehenen Wegstrecke vorzunehmen, vielmehr muß sich das Werkstück zumindest zu Beginn und am Ende der Förderstrecke in einer ganz exakten, für die Übergabe bzw. Übernahme geeigneten Position befinden. Abweichungen in irgend einer Richtung können dabei nur im Rahmen enger Toleranzen geduldet werden, weil stärkere Abweichungen die automatische Übergabe bzw. Übernahme unmöglich machen würden.

Die Aufgabe der Erfindung besteht infolgedessen darin, eine Vorrichtung der vorstehend beschriebenen Gattung so weiterzubilden, daß das Werkstück exakter ausgerichtet wird, damit die Übergabe jeweils mit der notwendigen Präzision erfolgen kann.

Zur Lösung dieser Aufgabe wird erfindungsgemäß vorgeschlagen, daß die Vorrichtung der eingangs genannten Art dadurch gekennzeichnet ist, daß das Werkstück mittels einer Palette od. dgl. von einer ersten Tragvorrichtung, insbesondere einem gleislosen Flurförderzeug, auf die Ausrichtvorrichtung aufsetzbar ist und die Bearbeitungsmaschine eine zweite Tragvorrichtung aufweist, an welche die genau ausgerichtete Palette od. dgl. übergebbar ist und daß der seitliche Abstand der Führungsrollen auf den Seitenabstand der unteren, sich in Vorschubrichtung erstreckenden, mit den Rollen zusammenwirkenden Paletten-Längskanten ein- und feststellbar ist. Die Palette od. dgl. kann mit hoher Genauigkeit gearbeitet und an die Tragvorrichtungen sowie das Flurförderzeug, soweit notwendig, angepaßt werden. Somit ist ein genaues Ausrichten der Palette od. dgl. und damit indirekt auch des Werkstücks möglich. Sowohl die Übernahme als auch die Übergabe der Palette od. dgl. mit dem Werkstück bereitet demnach trotz der geforderten Präzision keinerlei Schwierigkeiten. Dies ist die Grundlage für einen automatischen Transport von der ersten zur zweiten Tragvorrichtung. Es findet stets eine genaue Ausrichtung sowohl in Längs- als auch in Querrichtung statt. Demnach wird das Werkstück bzw. die Palette korrekt entlang einer vorgegebenen Linie bewegt. Seitliche Abweichungen davon sind ausgeschlossen. Das seitliche Auspendeln während des Transports, welches die vorbekannte Vorrichtung zuläßt, ist mit der erfindungsgemäßen Vorrichtung ausgeschaltet.

Eine Weiterbildung dieser Vorrichtung ist gekennzeichnet durch zwei, eine Vertikal-Zentriereinrichtung bildende, parallele Tragrollenbahnen, deren Stützflächen bzw. -linien sich auf gleichem Niveau befinden und deren seitlicher Abstand geringer ist als die Breite der Palette od. dgl., quer zu ihrer Vorschubrichtung gemessen. Diese Tragrollenbahnen bilden die eigentliche Abstützung für die Palette und deren Bewegungsebene. Es reicht, wenn die gegeneinanderweisenden Rollenenden die Palette od. dgl. an ihren geführten Längsrändern im Randbereich untergreifen. Im übrigen ist die rollende Reibung bei der Vorwärtsbewegung der Palette od. dgl. gegenüber einer gleitenden im Hinblick auf eine größtmögliche Schonung der Palettenauflageflächen bzw. -längskanten grundsätzlich von Vorteil. Außerdem ist es auch sehr zweckmäßig, wenn der seitliche Abstand der Tragrollenbahnen einstellbar und damit an verschieden breite Paletten od. dgl. anzupassen ist.

Eine andere Variante der Erfindung kennzeichnet sich dadurch, daß die Achsen der Rollen der einen Rollenbahn koaxial zu den Achsen der Rollen der anderen Rollenbahn verlaufen und der Abstand der ersten Rolle von der letzten jeder Rollenbahn annähernd der Länge der Palette in Vorschubrichtung entspricht. Die Ausrichtvorrichtung ist gewissermaßen eine Zwischenstation und insofern ist es zweifellos von Vorteil, wenn man ihre Länge, in Übergaberichtung gesehen, nicht unnötig größer wählt als unbedingt erforderlich, d. h. sie in der Größenordnung der Palettenlänge hält. Dies reicht zum vollständigen korrekten Ausrichten gegenüber der zweiten Tragvorrichtung vollkommen aus.

Eine weitere Ausgestaltung der Vorrichtung ergibt sich aus Anspruch 5. Auch bei der Horizontal-Zentriereinrichtung bilden, ebenso wie bei den vertikalen Rollenbahnen, die jeweils oben liegenden Mantellinien der Rollen die Gleitbahn bzw. geometrische Orte für die Definition der Gleitebenen. Des weiteren verlaufen auch die Achsen der schräg stehenden Rollen senkrecht zur Bewegungsrichtung der Palette od. dgl. Insgesamt entsteht durch die horizontalen und geneigten Stützflächen ein nach oben offener Kanal mit trapezförmigem Querschnitt. In diesen wird die Palette bei der Übergabe von der ersten Tragvorrichtung von oben her abgesenkt. Aufgrund der Schrägen, in Verbindung mit dem Eigengewicht der Palette od. dgl., kommt es zu einem sofortigen automatischen Ausrichten in vertikaler und horizontaler Richtung. Die Übergabe an die zweite Tragvorrichtung erfordert infolgedessen lediglich noch eine eindimensionale Verschiebebewegung parallel zu den Längskanten der Palette od. dgl. Im übrigen müssen die schrägen Rollen so tief zwischen die Horizontalen hineinragen, daß ihre jeweils oben liegenden Mantellinien mindestens bis zu der durch die oberen Mantellinien der horizontalen Rollen definierten Ebene reichen, möglichst aber noch etwas tiefer. Des weiteren ist es sehr zweckmäßig, daß die Rollen axial verschiebbar gelagert sind. Man vermeidet dadurch beim Ausrichten der Palette od. dgl. eine gleitende Reibung. Im übrigen erfolgt das Ausrichten der Palette od. dgl. gegenüber den vier Rollenbahnen einerseits bereits beim Absenken in der beschriebenen Weise und zum andern beim Verschieben quer zur Absenkbewegung. Soweit es die Übergabevorrichtung zuläßt, kann ein gegebenenfalls zweckmäßiges restliches Ausrichten beim Hinausschieben aus der Ausrichtvorrichtung vorgenommen werden.

Die Rollen sind vorteilhafterweise mittels sogenannter Kugelbüchsen gelagert, so daß auch an dieser Stelle eine gleitende Reibung vermieden wird. Außerdem sind sie in weiterer Ausgestaltung der Erfindung gegen die Kraft einer Rückstelleinrichtung axial verschiebbar. Dabei handelt es sich aus Kostengründen insbesondere um Federn.

Eine bevorzugte Weiterbildung der Erfindung besteht darin, daß die Zentriereinrichtungen in vertikaler Richtung ein- und feststellbar sind. Man kann zwar gegebenenfalls den linken und rechten Teil jeder der beiden Zentriereinrichtungen separat ein- bzw. verstellen, jedoch ist es vorteilhafter, wenn man dies gemeinsam vornimmt.

Der linke und der rechte Teil der Vertikal- und Horizontal-Zentriereinrichtung sind in weiterer Ausbildung der Erfindung jeweils an einem Traggestell od. dgl. angebracht und in der Art von seitlichen Auslegern ausgebildet, die gegeneinander weisen und mit der Palette zusammen eine tunnelartige Einrichtung zum Durchfahren mit dem Flurförderzeug od. dgl. bilden. Dabei können die beiden Traggestelle mittels einer gemeinsamen Grundplatte, welche das Durchfahren nicht stört, zu einem einheitlichen Gestell zusammengefaßt sein. Der linke und der rechte Teil der Vertikal- und Horizontal-Zentriereinrichtung sind dabei so weit auseinander, daß der dort befindliche Teil der ersten Tragvorrichtung ungestört hindurchbewegt und zum Absetzen der Palette abgesenkt werden kann.

Eine weitere Ausführungsform der Erfindung ist gekennzeichnet durch eine mit der Palette kuppelbare Zugvorrichtung der zweiten Tragvorrichtung, wobei die Zugvorrichtung insbesondere als Hydraulik- oder Pneumatikzylinder ausgebildet und die Palette eine Werkstück-Spannpalette ist. Letztere besitzt in bekannter Weise Führungen, welche das präzise Übergeben an die zweite Tragvorrichtung sichern und ein ganz genaues Ausrichten auf der zweiten Tragvorrichtung gewährleisten.

In der Zeichnung ist ein Ausführungsbeispiel der Erfindung schematisch dargestellt. Es zeigen :

Figur 1   eine Seitenansicht der Vorrichtung,
Figur 2   einen Schnitt gemäß der Linie II-II der Fig. 1.

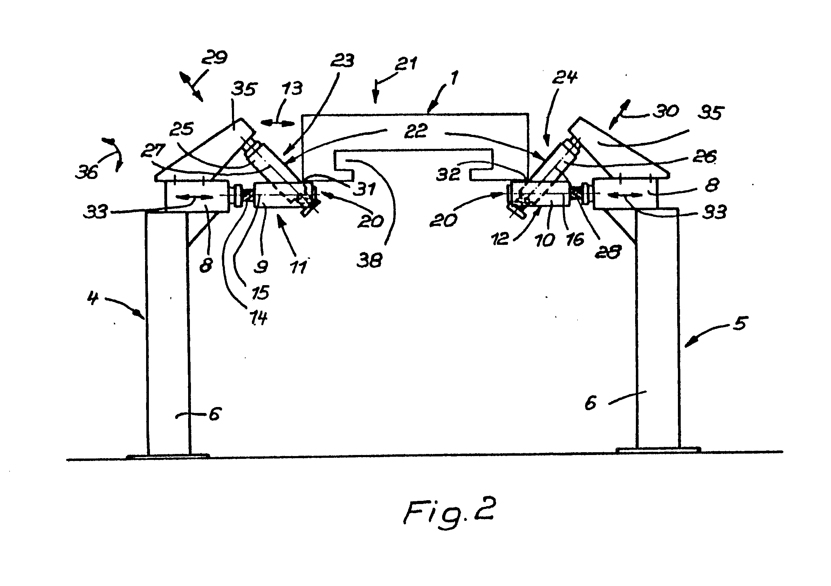

Die Vorrichtung zum Übernehmen einer Palette 1 od. dgl. von einer bewegbaren ersten Tragvorrichtung 2 insbesondere eine gleislosen Flurförderzeugs 3 besteht, wie Fig. 2 zeigt, in bevorzugter Weise aus einem ersten, beispielsweise linken Vorrichtungsteil 4 sowie einem zweiten, in diesem Fall rechten Vorrichtungsteil 5, die in nicht näher gezeigter Weise z. B. über eine Grundplatte miteinander verbunden sein können. Jedes dieser Vorrichtungsteile besteht beim Ausführungsbeispiel aus zwei kräftigen Ständern 6 und 7, auf denen ein Querträger 8 aufliegt. An letzterem sind eine mittlere sowie zwei äußere Rollen 9 bzw. 10 gelagert, die eine linke bzw. rechte Rollenbahn 11 bzw. 12 bilden. Es müssen jedoch nicht notwendigerweise drei Rollen pro Rollenbahn sein, vielmehr kann man auch zwei oder mehr als drei Rollen vorsehen. Die Rollen 9 und 10 sind drehbar auf ihren Achsen gelagert und mit Hilfe nicht dargestellter Kugelbüchsen im Sinne des Doppelpfeils 13 verschiebbar. Die Verschiebung erfolgt aus der gezeichneten Ausgangslage heraus gegen den Widerstand einer Rückstelleinrichtung 14, zweckmäßigerweise einer Feder. Die Achsen 15 und 16 der Rollen 9 und 10 verlaufen in horizontaler Richtung sowie senkrecht zur Bewegungsrichtung 18 der Palette 1 bei der Übergabe an eine zweite Tragvorrichtung 19. Außerdem sind die linken und rechten Rollen koaxial angeordnet, wobei ihre freien Enden gegeneinander weisen. Die beiden Rollenbahnen 11 und 12 bilden eine Vertikal-Zentriereinrichtung 20 für die von oben her im Sinne des Pfeils 21 abgesenkte Palette 1.

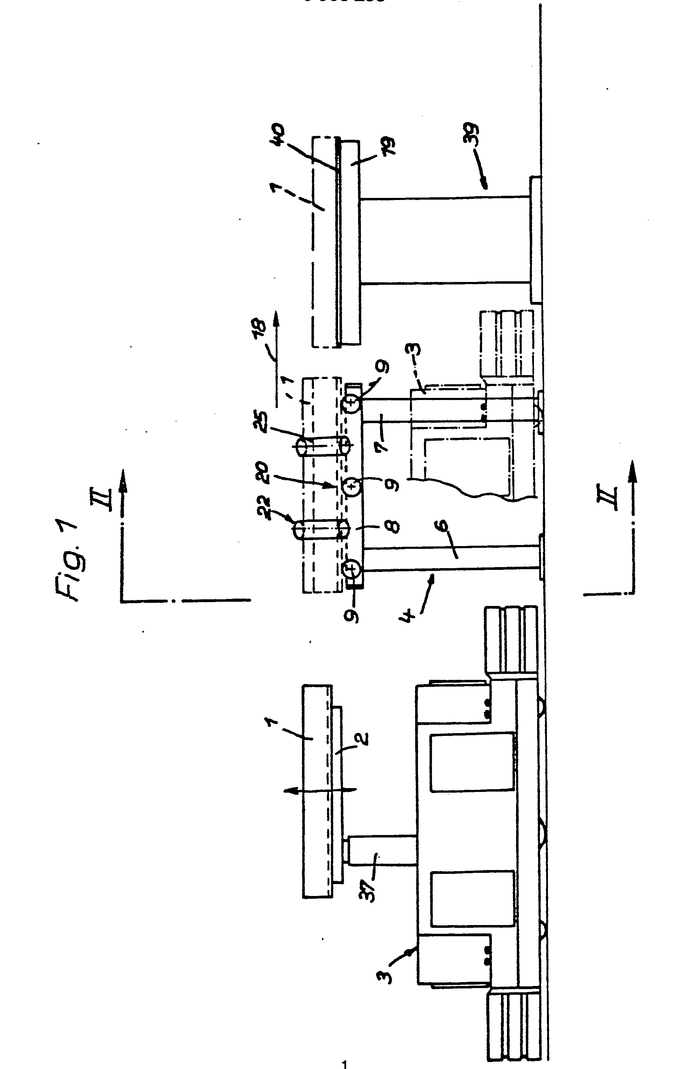

Die Vorrichtung umfaßt außerdem noch eine Horizontal-Zentriereinrichtung 22 für die Palette 1, welche in analoger Weise aus einer linken schrägen Rollenbahn 23 sowie einer rechten schrägen Rollenbahn 24 besteht. Jede dieser beiden Rollenbahnen ist ihrerseits aus mehreren, schräg angeordneten Rollen 25 bzw. 26 aufgebaut. Gemäß Fig. 1 sind die Rollen 25 auf Lücke zu den Rollen 9 angeordnet. Entsprechendes gilt für die Rollen 26 und 10. Die Achsen 27 und 28 der Rollen 25 und 26 bilden miteinander einen Winkel von vorzugsweise etwa 90°. Andererseits bildet eine durch die Achsen 28 gelegte Ebene mit einer anderen Ebene durch die Achsen 15 einen Winkel von mehr als 90°, beim Ausführungsbeispiel vorzugsweise etwa 135°. Auch die Achsen 27 und 28 verlaufen senkrecht zur Bewegungsrichtung 18. Die Rollen 25 und 26 sind in Richtung der Doppelpfeile 29 bzw. 30 verschiebbar auf ihren Achsen gelagert, wobei wiederum Kugelbüchsen oder vergleichbare Einrichtungen Verwendung finden. Auch ihre Verschiebung erfolgt gegen den Widerstand von Rückstellfedern, die sie in bevorzugter Weise ebenso wie bei den Rollen 9 und 10 in einer Mittelstellung halten. Aus Gründen der Übersicht sind die Federn nur teilweise gezeichnet.

In Fig. 2 ist die Palette 1 horizontal und vertikal ausgerichtet. Ihre Längskanten 31 und 32 an der Palettenunterseite, die sich beide in Bewegungsrichtung 18 erstrecken, liegen deshalb genau in der Winkelecke der durch die horizontalen und schrägen Rollen bzw. ihre jeweils oberen Mantellinien definierten gedachten, winklig angeordneten « Stützflächen ».

Um die Vorrichtung an verschieden breite Paletten 1 od. dgl. anpassen zu können, ist es infolgedessen zweckmäßig, wenn man die Querträger 8, an welchen die Rollen 9 bzw. 10 drehbar gelagert sind, im Sinne der Doppelpfeile 33 verschieb- und feststellbar macht. Außerdem sind die zusätzlichen Träger 34 und 35, an welchen die schräg angeordneten Rollen 25 bzw. 26 gelagert sind, auf den Querträgern 8 ebenfalls im Sinne der Pfeile 33 verschieb- und arretierbar. Zusätzlich oder alternativ kann man noch eine Verschwenkung der zusätzlichen Träger 34 und 35 im Sinne des Doppelpfeils 36 vorsehen.

Das linke Vorrichtungsteil 4 und das rechte Vorrichtungsteil 5 bilden mit den Zentriereinrichtungen 20 und 22 einen gewissermaßen nach oben offenen Tunnel, in welchen das gleislose Flurförderzeug 3 einfahren kann und der dann nach dem Aufsetzen der Palette 1 od. dgl. geschlossen ist. Durch den Zwischenraum der linken und rechten Hälften der Zentriereinrichtungen 20 und 22 ragt beim Einfahren und Absenken der Palette 1 die Hubvorrichtung 37 des gleislosen Flurförderzeugs 3 hindurch. Letzteres ist fahrerlos und aufgrund dieser Hubvorrichtung 37 in der Art eines Hubstaplers ausgebildet. Am oberen Ende der Hubvorrichtung 37 befindet sich die plattenartige, bewegbare Tragvorrichtung 2, welche lose in die am unteren Ende der Palette 1 od. dgl. angebrachte Führung 38 eingreift oder die Palette untergreift, so daß sich die Tragvorrichtung löst, sobald die Palette 1 od. dgl. auf den Zentriereinrichtungen aufliegt. Anschließend kann dann das gleislose Flurförderzeug durch den erwähnten Tunnel hindurch weiter- oder wieder zurückfahren.

Bei der Palette 1 handelt es sich um eine sogenannte Werkstück-Spannpalette, deren Führung 38 beispielsweise im Querschnitt T-formig ist. Eine Gegenführung mit gleichem Profil ist an der zweiten Tragvorrichtung 19 angebracht. Bei letzterer handelt es sich beispielsweise um den Bearbeitungstisch einer nicht näher gezeigten Werkzeugmaschine 39. Daran befindet sich eine nicht dargestellte, ausfahrbare Zugvorrichtung, beispielsweise ein Hydraulik- oder Pneumatikzylinder, mit deren Hilfe man die Palette 1 od. dgl. von der Zentriereinrichtung 20, 22 in Pfeilrichtung 18 herüberziehen kann, so daß die Führung 38 der Palette 1 mit der Gegenführung 40 der zweiten Tragvorrichtung 19 in Eingriff kommt. Auf diese Weise ist ein millimetergenaues Ausrichten der Palette 1 gegenüber der Werkzeugmaschine möglich.

## Patentansprüche

1. Vorrichtung zum selbsttätigen Ausrichten und Zentrieren von Werkstücken für die Förderung an Bearbeitungsmaschinen mit zwei in einer Bewegungsebene wirksamen Sätzen von zylindrischen Rollen, nämlich Tragrollen (9, 10) und hierzu geneigt angeordnete Führungsrollen (25, 26), dadurch gekennzeichnet, daß das Werkstück mittels einer Palette (1) od. dgl. von einer ersten Tragvorrichtung (2), insbesondere einem gleislosen Flurförderzeug, auf die Ausrichtvorrichtung aufsetzbar ist und die Bearbeitungsmaschine (39) eine zweite Tragvorrichtung (19) aufweist, an welche die genau ausgerichtete Palette od. dgl. übergebbar ist, und daß der seitliche Abstand der Führungsrollen (25, 26) auf den Seitenabstand der unteren, sich in Vorschubrichtung (18) erstreckenden, mit den Rollen (9, 10 ; 25, 26) zusammenwirkenden Paletten-Längskanten (31, 32) ein- und feststellbar ist.

2. Vorrichtung nach Anspruch 1, gekennzeichnet durch zwei eine Vertikal-Zentriereinrichtung (20) bildende, parallele Tragrollenbahnen (11, 12), deren Stützflächen bzw. -linien sich auf gleichem Niveau befinden und deren seitlicher Abstand geringer ist als die Breite der Palette (1) od. dgl., quer zu ihrer Vorschubrichtung (18) gemessen.

3. Vorrichtung nach Anspruch 2, dadurch gekennzeichnet, daß der seitliche Abstand der Tragrollenbahnen (11, 12) einstellbar ist.

4. Vorrichtung nach Anspruch 2 oder 3, dadurch gekennzeichnet, daß die Achsen (15) der Rollen (9) der einen Rollenbahn (11) koaxial zu den Achsen (16) der Rollen (10) der anderen Rollenbahn (12) verlaufen und der Abstand der ersten Rolle von der letzten jeder Rollenbahn (11, 12) annähernd der Länge der Palette (1) in Vorschubrichtung (18) entspricht.

5. Vorrichtung nach Anspruch 4 mit einer aus zwei Rollenbahnen (23, 24) bestehenden Horizontal-Zentriereinrichtung (22), deren Rollen (25, 26) in Vorschubrichtung (18) gesehen seitlich versetzt zu denjenigen (9, 10) der zugeordneten Vertikal-Rollenbahn (11, 12) angeordnet sind, insbesondere etwa auf Lückenmitte stehen, wobei die Mantellinien der schrägen Rollen (25, 26) auf denen die Palette (1) bzw. ihre betreffende Längskante aufliegt, in einer gedachten Stützfläche liegen, welche einen 90° übersteigenden Winkel mit einer anderen gedachten, durch die oberen Mantellinien der horizontalen Rollen (9, 10) gelegten Horizontalebene bildet und wobei die freien Enden der schrägen Rollen (25, 26) der Horizontal-Zentriereinrichtung (22) mindestens in die Zwischenräume zwischen den horizontalen Rollen (9, 10) hineinragen, dadurch gekennzeichnet, daß die durch die schrägen Rollen (25) der schrägen Rollenbahn (23) definierte Ebene mit derjenigen der schrägen Rollen (26) der anderen schrägen Rollenbahn (24) der Horizontal-Zentriereinrichtung (20), einen Winkel in der Größenordnung von 90° einschließt.

6. Vorrichtung nach Anspruch 5, dadurch gekennzeichnet, daß die Rollen (9, 10 ; 25, 26) axial verschiebbar gelagert sind.

7. Vorrichtung nach Anspruch 6, dadurch gekennzeichnet, daß die Rollen (9, 10 ; 25, 26) mittels sogenannter Kugelbüchsen gelagert sind.

8. Vorrichtung nach Anspruch 6 oder 7, dadurch gekennzeichnet, daß die Rollen (9, 10 ; 25, 26) gegen die Kraft einer Rückstellenrichtung (14) axial verschiebbar sind.

9. Vorrichtung nach wenigstens einem der Ansprüche 2 bis 10, dadurch gekennzeichnet, daß die Zentriereinrichtungen (20, 22) in vertikaler Richtung ein- und feststellbar sind.

10. Vorrichtung nach wenigstens einem der Ansprüche 1 bis 9, dadurch gekennzeichnet, daß der linke und der rechte Teil der Vertikal-(20) und Horizontal-Zentriereinrichtung (22) jeweils an einem Traggestell (4, 5) od. dgl. angebracht und in der Art von seitlichen Auslegern ausgebildet sind, die gegeneinander weisen und mit der Palette (1) zusammen eine tunnelartige Einrichtung zum Durchfahren mit dem Flurförderzeug (3) od. dgl. bilden.

11. Vorrichtung nach Anspruch 10, mit einer an einem gleislosen Flurförderzeug (3) angebrachten ersten Tragvorrichtung (2), dadurch gekennzeichnet, daß das Flurförderzeug fahrerlos und in der Art eines Hubstaplers ausgebildet ist.

12. Vorrichtung nach wenigstens einem der vorhergehenden Ansprüche, gekennzeichnet durch eine mit der Palette (1) od. dgl. kuppelbare Zugvorrichtung der zweiten Tragvorrichtung, wobei die Zugvorrichtung insbesondere als Hydraulik- oder Pneumatikzylinder ausgebildet und die Palette eine Werkstück-Spannpalette ist.

**Claims**

1. Apparatus for the automatic alignment and centring of workpieces for conveyance to machines on which they are to be worked with, effective in one plane of movement, two sets of cylindrical rollers, namely supporting rollers (9, 10) and, disposed at an angle thereto, guide rollers (25, 26), characterised in that by means of a pallet (1) or the like, the workpiece can be taken from a first carrying device (2), in particular a floor conveyor which is not mounted on tracks, and placed on the aligning apparatus, the working machine (39) having a second carrying device (19), to which the accurately aligned pallet or the like can be transferred, and in that the lateral distance between the guide rollers (25, 26) can be adjusted and fixed in relation to the distance between the sides of the bottom longitudinal edges (31, 32) of the pallet which co-operate with the rollers (9, 10 ; 25, 26) and which extend in the direction (18) of forward feed.

2. Apparatus according to. Claim 1, characterised by, forming a vertical-centring means (20), two parallel supporting roller tracks (11, 12) of which the supporting surfaces or lines are on the same level and the lateral distance between which is smaller than the width of the pallet (1) or the like measure : transversely to its direction of feed (18).

3. Apparatus according to Claim 2, characterised in that the lateral distance between the supporting roller tracks (11, 12) is adjustable.

4. Apparatus according to Claim 2 or 3, characterised in that the spindles (15) of the rollers (9) of one roller track (11) extend coaxially of the axes (16) of the rollers (10) of the other roller track (12), the distance between the first roller and the last of each roller track (11, 12) approximately corresponding to the length of the pallet (1) in the direction of feed (18).

5. Apparatus according to Claim 4 with a horizontal centring apparatus (22) consisting of two roller tracks (23, 24), of which, viewed in the direction of feed (18), the rollers (25, 26) are laterally offset in relation to those (9, 10) of the associated vertical roller track (11, 12), being in particular and substantially in the middle of the gap, the generatrices of the inclined rollers (25, 26) on which the pallet (1) or its relevant longitudinal edge rests, being located in an imaginary supporting face enclosing an angle in excess of 90° with another imaginary horizontal plane passing through the upper generatrices of the horizontal rollers (9, 10), the free ends of the oblique rollers (25, 26) of the horizontal centring means (22) projecting at least into the intermediate spaces between the horizontal rollers (9, 10), characterised in that the plane defined by the inclined rollers (25) of the inclined roller track (23) enclosing an angle of the order of 90° with that of the oblique rollers (26) of the other oblique roller track (24) of the horizontal centring means (20).

6. Apparatus according to Claim 5, characterised in that the rollers (9, 10 ; 25, 26) are mounted so as to be axially displaceable.

7. Apparatus according to Claim 6, characterised in that the rollers (9, 10 ; 25, 26) are mounted by means of so-called ball-bushes.

8. Apparatus according to Claim 6 or 7, characterised in that the rollers (9, 10 ; 25, 26) are adapted for axial displacement against the force of a restoring device (14).

9. Apparatus according to at least one of Claims 2 to 10, characterised in that the centring means (20, 22) are adjustable and lockable in a vertical direction.

10. Apparatus according to at least one of Claims 1 to 9, characterised in that the left-hand and right-hand parts of the vertical (20) and horizontal (22) centring means are in each case disposed on a supporting framework (4, 5) or the like and are constructed in the manner of lateral outriggers which point towards each other and which, together with the pallet (1), form a tunnel-like arrangement through which the floor conveyor (3) or the like can travel.

11. Apparatus according to Claim 10, with a first carrying device (2) mounted on a floor conveyor (3) which is not mounted on tracks, characterised in that the floor conveyor has no driver and is constructed in the manner of a fork lift truck.

12. Apparatus according to at least one of the preceding Claims, characterised by a device which can be coupled to the pallet (1) or the like to pull the second carrying device, the pulling device being constructed in particular as a hydraulic ram or air-operated cylinder, the pallet being a workpiece-clamping pallet.

## Revendications

1. Dispositif destiné à l'alignement et au centrage automatiques de pièces pour le transport sur des machines d'usinage à l'aide de deux jeux de rouleaux cylindriques agissant dans un plan de déplacement, un jeu se composant de rouleaux porteurs (9,10) et l'autre de rouleaux de guidage (25, 26) placés de façon oblique, caractérisé en ce que la pièce peut être mise à l'aide d'une palette (1) ou similaire d'un premier dispositif porteur (2), notamment d'un chariot de manutention sans rails, sur le dispositif d'alignement, et la machine d'usinage (39) présente un second dispositif porteur (19) sur lequel on peut remettre la palette ou similaire alignée exactement, et en ce que l'écartement latéral des rouleaux de guidage (25, 26) est réglable et fixable en fonction de l'écartement latéral des bords inférieurs longitudinaux de la palette (31, 32) se trouvant dans le sens de l'avance (18) et agissant avec les rouleaux (9, 10 ; 25, 26).

2. Dispositif selon la revendication 1, caractérisé en ce que deux voies de rouleaux porteurs (11, 12) parallèles forment un équipement de centrage vertical (20), les surfaces ou lignes d'appui des rouleaux se trouvant au même niveau et leur écartement latéral étant inférieur à la largeur de la palette (1) ou similaire, mesuré transversalement au sens de l'avance (18).

3. Dispositif selon la revendication 2, caractérisé en ce que l'écartement latéral des voies de rouleaux porteurs (11, 12) est réglable.

4. Dispositif selon la revendication 2 ou 3, caractérisé en ce que les axes (15) des rouleaux (9) de l'une des voies de rouleaux (11) sont coaxiaux aux axes (16) des rouleaux (10) de l'autre voie de rouleaux (12), et que l'écart entre le premier rouleau et le dernier de chaque voie de rouleaux (11, 12) correspond à peu près à la longueur de la palette (1) dans le sens de déplacement (18).

5. Dispositif selon la revendication 4, comportant un dispositif de centrage horizontal (22) se composant de deux voies de rouleaux (23, 24) dont les rouleaux (25, 26), vus dans le sens de déplacement (18), sont placés avec un décalage latéral par rapport à ceux (9, 10) de la voie de rouleaux verticale (11, 12) afférente et se trouvent notamment à peu près au milieu du vide, les lignes des corps des rouleaux obliques (25, 26) sur lesquelles repose la palette (1) ou son bord longitudinal concerné, reposent sur une surface d'appui qui forme un angle supérieur à 90° avec un autre plan horizontal défini par les lignes supérieures des corps de rouleaux horizontaux (9, 10), les extrémités libres des rouleaux obliques (25, 26) du dispositif de centrage horizontal (22) rentrant au moins dans les espaces entre les rouleaux horizontaux (9, 10), caractérisé en ce que le plan défini par les rouleaux obliques (25) de la voie de rouleaux obliques (23) forme avec le plan des rouleaux obliques (26) de l'autre voie de rouleaux obliques (24) du dispositif de centrage horizontal (20) un angle de l'ordre de 90°.

6. Dispositif selon la revendication 5, caractérisé en ce que les rouleaux (9, 10 ; 25, 26) sont logés de façon déplaçables dans le sens axial.

7. Dispositif selon la revendication 6, caractérisé en ce que les rouleaux (9, 10 ; 25, 26) sont logés au moyen de douilles à billes.

8. Dispositif selon la revendication 6 ou 7, caractérisé en ce que les rouleaux (9, 10 ; 25, 26) sont déplaçables dans le sens axial en surmontant l'effort d'un dispositif de rappel (14).

9. Dispositif selon au moins l'une des revendications 2 à 10, caractérisé en ce que les équipements de centrage (20, 22) sont réglables et fixables dans le sens vertical.

10. Dispositif selon au moins l'une des revendications 1 à 9, caractérisé en ce que la partie gauche et la partie droite du dispositif de centrage vertical (20) et horizontal (22) sont chacune montée sur un cadre porteur (4, 5) ou similaire et formées par des bras latéraux opposés les uns aux autres et constituant avec la palette (1) un équipement du genre tunnel devant être traversé par le chariot de manutention (3) ou similaire.

11. Dispositif selon la revendication 10, pourvu d'un premier dispositif porteur (2) monté sur un chariot de manutention sans rails (3), caractérisé en ce que le chariot de manutention est sans conducteur et conçu à la manière d'un chariot élévateur.

12. Dispositif selon au moins l'une des revendications précédentes, caractérisé en ce qu'un dispositif de traction du second dispositif porteur est accouplable à la palette (1) ou similaire, le dispositif de traction étant notamment conçu sous forme de vérin hydraulique ou de vérin pneumatique et la palette sous forme de palette de serrage pour la pièce.

Fig. 1

0 063 253

Fig.2